Europäisches Patentamt

European Patent Office

Office européen des brevets

(11) Publication number: **0 258 941**
**A2**

# EUROPEAN PATENT APPLICATION

(21) Application number: 87201631.6

(22) Date of filing: 28.08.87

(51) Int. Cl.⁴: **A22C 25/14**

(30) Priority: 29.08.86 DK 4111/86

(43) Date of publication of application:
**09.03.88 Bulletin 88/10**

(84) Designated Contracting States:
**DE ES GB NL SE**

(71) Applicant: **Maskinfabrikken IRAS Esbjerg A/S**
**Gammelby Möllevej 3**
**DK-6700 Esbjerg(DK)**

(72) Inventor: **Popescu, Valeriu**
**Tranegaardsvej 72, 1-4**
**DK-2900 Hellerup(DK)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) **Method and apparatus for cleaning of round fish, including especially mechanical removal of gut from fish.**

(57) By inserting, in a procedure for the cleaning of roundfish, including especially removal of gut from fish such as cod, coalfish, haddock, salmon, trout and similar roundfish where the fish is retained during cutting and gut removal, a gill holder (9, 10) into each of the fish (1) gill clefts, by closing gill holders (9, 10) around the fish head while forming a corner at a contiguous angle (38) of 20-50, preferably 30° by the fish throat point (4), by moving a back head support (12) at the fish back head (5) forward and bringing it to bear predetermined pressure against the back head so that the fish head by the throat point is pressed against the corner which, as mentioned above, is formed by the two gill holders (9, 10) moved towards each other, a brand new retaining of a roundfish is achieved in the approximately triangle head cross section between the fish throat point and back head, and also the fish is having its throat point placed in the same place regardless of the roundfish size, i.e. where the two gill holders meet to form said corner. This in turn entails that much more accurate cuts can be made, and far more accurate cuts in the fish can be made, than possible so far.

Fig. 10.

Fig. 9.

## Method and apparatus for cleaning of round fish, including especially mechanical removal of gut from fish.

The present invention concerns a procedure for cleaning of round fish, including especially mechanical removal of gut from fish, such as cod, coalfish, haddock, salmon, trout, and similar roundfish where the fish is retained during the cutting and during the removal of the gut.

When applying the mechanical procedures known so far, the fish is placed with its back against a movable or stationary surface where the fish will either bear against a dog by its nose or is caught by pectoral fin holders for fixing of the fish during the cutting and the removal of the gut. By these characteristic procedures, the gut is removed while being destroyed at the same time as the purpose of the procedures known so far is merely to free the fish of the gut without any damage, apart from cutting, of the other parts of the fish.

The procedure to the invention is characteristic in that a gill holder is conducted into each of the fish gill clefts, that the gill holders are closed around the fish head while forming a corner having a contiguous angle of 20-50, preferably 30°, at the fish throat point, that a head support at the back of the head of the fish is moved forward and brought to bear predetermined pressure on its back head so that the fish head at the throat point is pressed against the corner which, as mentioned above, has been formed by the two gill holders conducted towards each other. Thus, one achieves not only a brand new retaining of a roundfish at the approximately triangle head cross section between the fish throat point and back of its head but it is also achieved that through this procedure the fish will have its throat point placed in the same place, regardless of the roundfish size, i.e. where the two gill holders meet to form said corner. This allows for a virtually uniform placing of the fish belly and collar bone in relation to an imaginary course of a belly cutting or length cutting knife conducted more or less parallel with the fish spine and closely past said throat point, regardless of the fish size, thus allowing for much more accurate cuts in the fish than practicable so far.

By making in this way a cut into the fish along its collar bone and gill edges from the throat point and right into its spine to cut the gut free at the gullet, any puncture of the gut is prevented, a fact meaning a great deal to the use of same.

Further, it is achieved, at any rate where the fish is retained with its head or back at the top, that the throat point place at the fish belly will be in practically the same place in relation to said corner regardless of the fish size, and regardless of whether the throat cutting is tangent to the fish spine in front or partially encloses the spine at both sides of same.

By cutting, to the invention, the fish abdominal wall and that alone in a longitudinal section from the throat point cut loose through the throat cutting to the fish anus, it will be achieved that the internal organs or gut of the fish remain entirely undamaged during this longitudinal cutting.

By catching, to the invention, the gut thus cut loose by inserting a spade-shaped ejector or scraper unit possibly width distendable, without any sharp edges, between the gut and spine, and giving the gut by the scraper unit an acceleration in the direction away from the spine and towards the fish belly, you will achieve that through their inertia, the internal organs of the fish will be pulled out of the fish abdominal cavity from where they will finally hang only at the gut connected with the anus, the gut sometimes being torn by said inertia where the mass of gut is considerable, and necessitating in the case of a smaller mass that the gut hanging out from the anus area will have to be cut loose at the anus area. Thus, a very careful removal of the internal organs of the fish has been achieved so that these will not, in the manner adopted so far with the known cleaning machines, be destroyed and have to be rejected as waste. Due to this careful removal, the great shortage of raw materials for canned cod liver and cod roe may be remedied, more people may benefit from fresh undamaged cod roe and cod liver, and the seas will be polluted less by fish offal.

Many environment organizations consider the chuching out of gut an essential pollution factor in relation to our seas.

Another import reason why the internal organs of fish should be removed in undamaged condition is that of inventions made by D.H. Shin and R.R. Zall of the Cornell University, U.S.A., which inventions have been published in Process Biochimestry, February, 1986. According to this, from cod gut an important proteolytic enzyme has been identified, reminding us of the trypsin of mammals. The enzyme is formed in the cod pylorus diverticula, some appendages between the fish gut and stomach, which will by the procedure to the invention be released from the cod in undamaged condition. Such proteolytic enzymes are significant in cheese and drug production, and with meat maturing and as an ingredient in detergents.

By making the longitudinal section from the throat point under distension of the abdominal wall and cutting of the abdominal wall between a knife and a control finger which is conducted from the throat point inside along the abdominal wall between gut and abdominal skin and at least to the anus, the longitudinal section is prevented from damaging the gut being immediately inside the absominal wall.

The invention also concerns an apparatus for the exercise fo the procedure, and the apparatus is characteristic in that it covers a head holder which has two gill holders to engage a gill cleft each of a roundfish put into the head holder for retaining its head at the throat point at a corner of 20-50, preferably 30° formed by the gill holders during the operations relating to the removal of the gut.

The two gill holders cover appropriately two mutually revolvable guide units which together in one position form a wedge-shaped inlet for a fish backhead, in another position will form an opening at the bottom of the wedge shape for... passage of the fish back head with the guide units engaged with the gill clefts, and in a third position open further for release of the fish.

In that the head holder has a head support which is slidable and designed to release a pressure practically proportional to the head support distance from said corner or the bottom of said wedge shape between the revolvable guide units, it is achieved, in addition to the placing of the fish throat point in the same place during each longitudinal operation, that the fish is retained reliably regardless of its weight and without damage occurring to the fish head.

In that the gill holders have been designed to be mutually locked in a position in which the fish head is wedged at the corner or the wedge-shaped opening between gill holders by the head support pressing against the fish back head, one achieves a further securing of the throat point position in the room in relation to the course of the throat cutting knife as well as the course of the longitudinal cutting knife.

Even though the procedure for retaining of the fish by its head is preferably highly suitable for automation of the removal of the gut, the procedure and the apparatus for the retaining of the head may, of course, also be used in the case of manual procedures where the fish placed in holders to the invention are for instance fed on a round table or a conveyor belt to places of work where throat cutting and/or longitudinal cutting and/or tipping out of gut are performed manually.

Also, the procedure and the apparatus for longitudinal cutting of the fish abdominal wall are, in addition to contributing towards undamaged removal of fish gut in an automatic process where the fish to the invention are retained in a special way by their heads, also highly suitable for longitudinal cutting of abdominal walls of fish retained in another way. If, for instance, a throat cut fish is suspended by its pectoral fins by pectoral fin holders, the knife equipped with an end-rounded guide finger may ... under distension of the abdominal wall also be used here for cutting of the fish abdominal wall alone in a longitudinal cut from the throat point cut loose by the throat cutting to the anus where the finger is moved from the throat point cut loose inside along the abdominal walls between the fish gut and abdominal wall.

The same applies to the procedure and the apparatus for insertion of the spade-shaped scraper unit between gut and spine of a fish retained in another way to the invention, and where the gut may also be given an acceleration by the scraper unit in the direction away from the spine and towards the fish belly for careful tipping out of the internal organs of the fish.

The operations for control of the head holder may be controlled electrically, hydraulically, pneumatically, and/or mechanically.

Below, the invention will be further explained in connection with a performance example and with reference to the drawing where

Fig. 1 shows a roundfish while being put into the head holder,

Fig. 2A, 2B the fish put into the head holder before a head support presses the throat point against a corner in the head holder,

Fig. 3A-3B Throat Cutting,

Fig. 4A-4B a screened knife before being inserted for cutting of the abdominal wall,

Fig.5A-FB abdominal wall cutting to anus,

Fig. 6A-6B insertion of ejector unit and ejection of gut,

Fig. 7A-7B release of gut by cutting off

Fig. 8 a mode of design for a headholder front view,

Fig. 9 the head holder in Fig. 8 from a top view

Fig. 10 the head holder from a side view with round fish throat point pressed against gill holder corner by back head support,

Fig. 11 an abdominal cutting device while being inserted by an anus finder finger,

Fig. 12 the cutting device shown in Fig. 11 for longitudinal cutting of abdominal wall during distension of this with two cutting knife positions,

Fig. 13 the extreme end of the abdominal wall extension unit from a side view,

Fig. 14 the extreme end of the abdominal wall unit from a front view,

Fig. 15 a section through the abdominal wall unit with distended abdominal wall,

Fig. 16 an ejector or scraper unit from a side view under insertion of a head-held roundfish,

Fig. 17 the scraper unit shown in Fig. 16 before and after ejection of the gut,

Fig. 18 the scraper unit from a top view in a starting position, and

Fig. 19 the scraper unit inserted into an abdominal cavity and in distended condition.

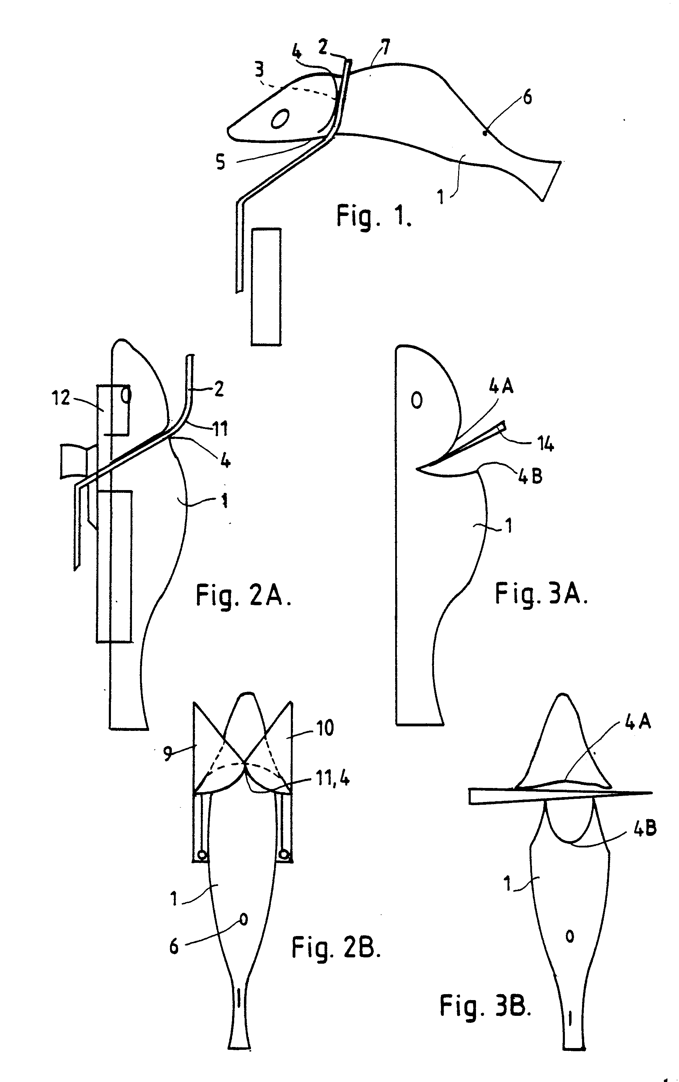

Fig. 1 shows a roundfish 1, as an example of a length of 35-90 cm while being put into a head holder 2 to the invention. The head holder has been designed to engage with both fish gill clefts under the collar bones 3 near the fish throat point 4 with the fish back head 5 foremost while the fish is being put in. Between the fish throat point 4 and anus 6 the part 7 of the fish abdominal wall required to be cut is found.

The head holder 2 consists of a right hand gill holder 9 and a left hand gill holder 10 which may while the fish 1 is put in be mutually opened by overcoming a spring power so that the fish back head 5 and the gill clefts may pass the contact point 11 of the two gill holders so that the fish 1 may slide down into the position shown in Fig. 2A, 2B where a back head holder 12 presses the fish now hanging in the gill clefts and the collar bone 3 forward towards point 11 after the gill holders 9, 10 have been locked in a position in which they touch or practically touch each other at point 11. The head support 12 presses the fish back head 5 forward until the fish 1 throat point 4 bears against the gill holders 9, 10.

The fish is now retained by the head holder with its head in a triangle opening formed between the two gill holders 9, 10 and the back head support 12.

Then the fish 2 passes a throat cutting knife 14 or similar for opening of the fish abdominal all at the throat point 4, and in case throat scanning is required, this is cut in to the backbone where the gullet is cut without cutting the spine. The throat cutting may appropriately be done partially around the spine. The throat cutting knife 14 or similar cutting tool will be clear of this during the entire cutting operation, due to the design of the head holder 2. After that, the part of the fish throat point 4 cut loose is positioned as shown in Fig. 3A, 3B , with the part of the throat point 4A lying at the head and the part of the throat point 4B lying on the abdominal wall.

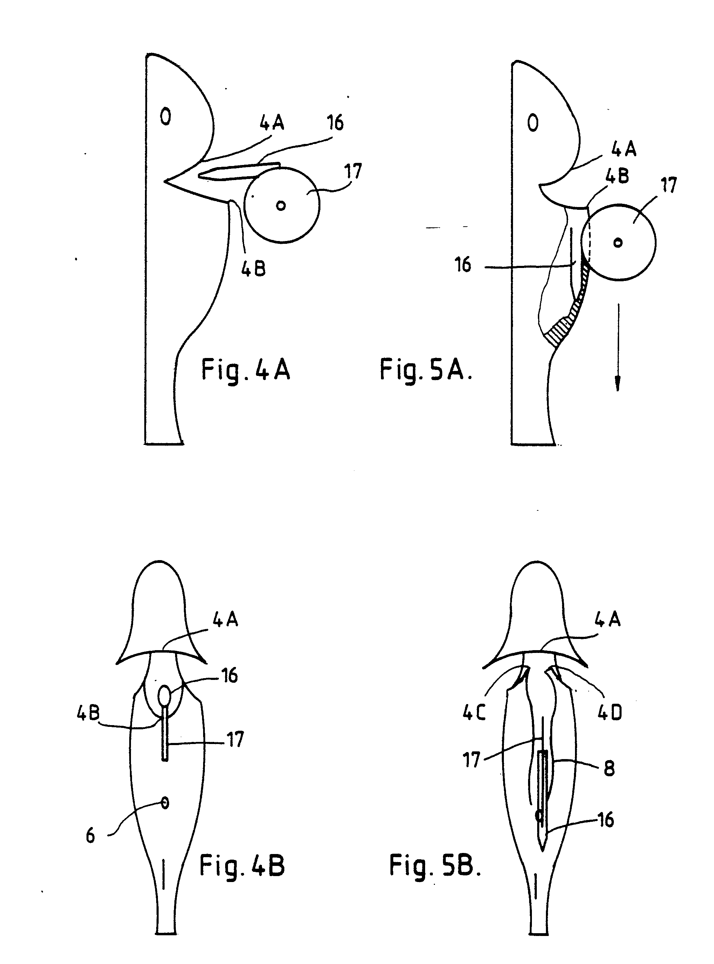

The fish 1 thus retained in the head holder, the fish is moved on for longitudinal cutting as shown in Figs. 4A, 4B, 5A, and 5B where an anus finder finger 16 with rounded tip and an appurtenant longitudinal cutting knife 17 are conducted down into the abdominal cavity 7 for cutting from the throat point part 4B to the anus 6 where the finger 16 prevents the knife 17 from damaging the fish gut. Due to the fish 1 being kept securely in place by the head holder 2, and due to the knife 17 with the finger 16 being kept in a specific course, the finger 16 will leave the fish 1 at the anus 6 or in its immediate vicinity after which the fish abdominal wall 7 has been cut open. For further control of this cutting, along with the finger 16 you may use outside backstop units not shown which will during the cutting by the knife 17 of the abdominal wall 7 work together with the finger 16 for distension or tension of the abdominal wall 7 during the cutting, something which will also ensure that the finger 16 with knife 17 will leave the fish near the anus 6.

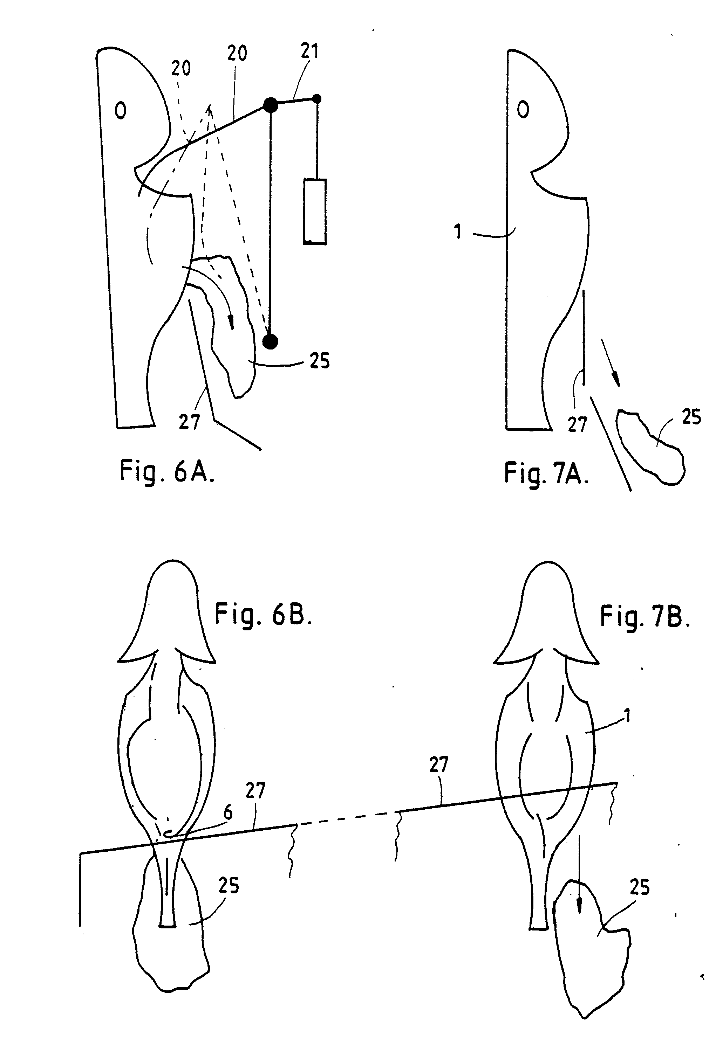

At the next working station where the fish is still retained in the head holder 7, as shown in Fig. 6A a scraper unit 20 is inserted, held in a scraper mechanism 21, and is moved... in such a way that the fish gut 25 is ejected after the scraper unit 20 has been inserted into the abdominal cavity to the spine behind the gut 25 and somewhat further down along the spine. The scraper unit 20 is preferably distendable during the insertion and remains distended during the ejection of the gut 25.

The gut 25 is sometimes torn off by this operation or sticks to the anus 6 so that the gut will have to be cut free of the anus using a knife 27 which as a example is running obliquely upwards during the fish passage and may be equipped with a forward and backward movement for cutting of the fish gut when this hits the knife as shown in Fig. 6B to Fig. 7B. The undamaged gut 25 leaving the fish in Fig. 7A, 7B, then passes on for further processing while the fish still retained in the head holder is cleaned through, possibly solely by washing down.

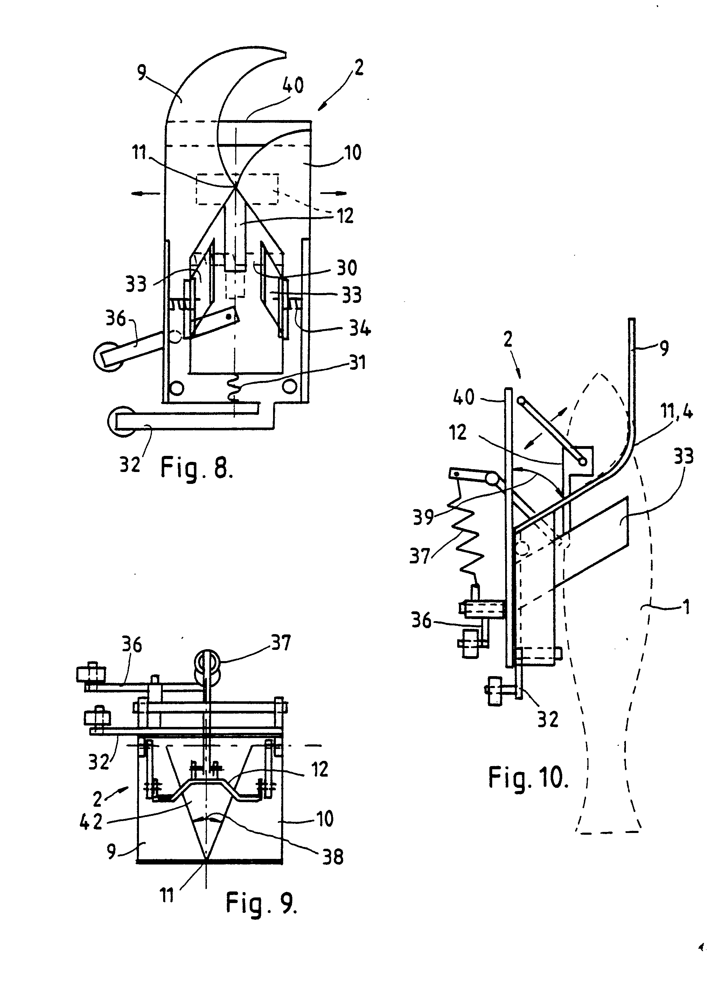

Fig. 8 shows a head holder of asymmetric shape so that the fish back head may be inserted at the right hand side of the head holder, and thus the head holder 2 forward movement to the right hand side will contribute towards pulling the fish 1 into its place between gill holders 9, 10 which are pressed so as to touch each other at point 11 by a gill holder spring 30. The two gill holders 9, 10 engage each other at 31 so that a curve follower arm 32 for the gill holder 10 may by a curve rail not shown control the opening and closing movements of the gill holders and keep them in locked position during all the processing operations. In the mode of design shown, the holder also covers two lateral steering control plates 33 with springs 34 to press the plates 33 to bear against the sides of a fish 1 placed in the holder 2 which side plates 33 are opened for receiving a fish 1 while the gill holders 9, 10 receive the fish while it is put in. The back head holder or back head support 12 has been pulled back before it is put in so that a fish may be inserted into the holder, and after it has been put in, the back head support is moved forward due to the fact that a ... curve roll for a moment arm 36 for the back head support 12 runs up on a curve rail not shown. The lifting of the moment arm 36 is transferred to the back head support 12 through a back head support tension spring 37, thus causing the fish 1 head with its throat point 4 to be moved to bear against the contact point 11 of the gill holders 9, 10 in the corner formed between gill holders which has an angle 38 which is really 30° but seems a little bigger in Fig. 9 as the gill holders as shown in Fig. 10 form an angle 39 with the vertical of abt. 60° ± 10°. The true angle 38 may appropriately be between 20 and 50° and is preferably 30° for codfish, the angle chosen depending somewhat on the species of fish for which the head holder is designed. The same thing applies to the angle 39 as various species of fish have a collar bone course under various angles with the spine. The head holder is attached to a frame 40 which in turn is fixed to a round table, chain conveyor or similar not shown which will retain the fish with its head or back towards.

The fish back head is pressed down between 9 and 10 and released so that the fish hangs loose; when the curve follower arm 32 for the gill holders hits its curve rail, gill holders 9 and 10 are kept together, and the spring 37 sets the back head support 12.

Fig. 9 shows the triangle opening 42 in horizontal projection which triangle opening 42 retains the fish 1 head with its throat point 4 against the point 11 as the back head support 12 presses the fish head against the edges of the two gill holders 9, 10. Fig. 10 shows the fish 1 dot-and-dash lined retained in the head holder 2.

At the next station, the fish 1 retained in head holder 2 will, after being throat cut at a working station not shown, meet the next working station where the fish abdominal wall, and nothing but that, is cut in a longitudinal section from the throat point cut loose by the throat cutting to the anus 6.

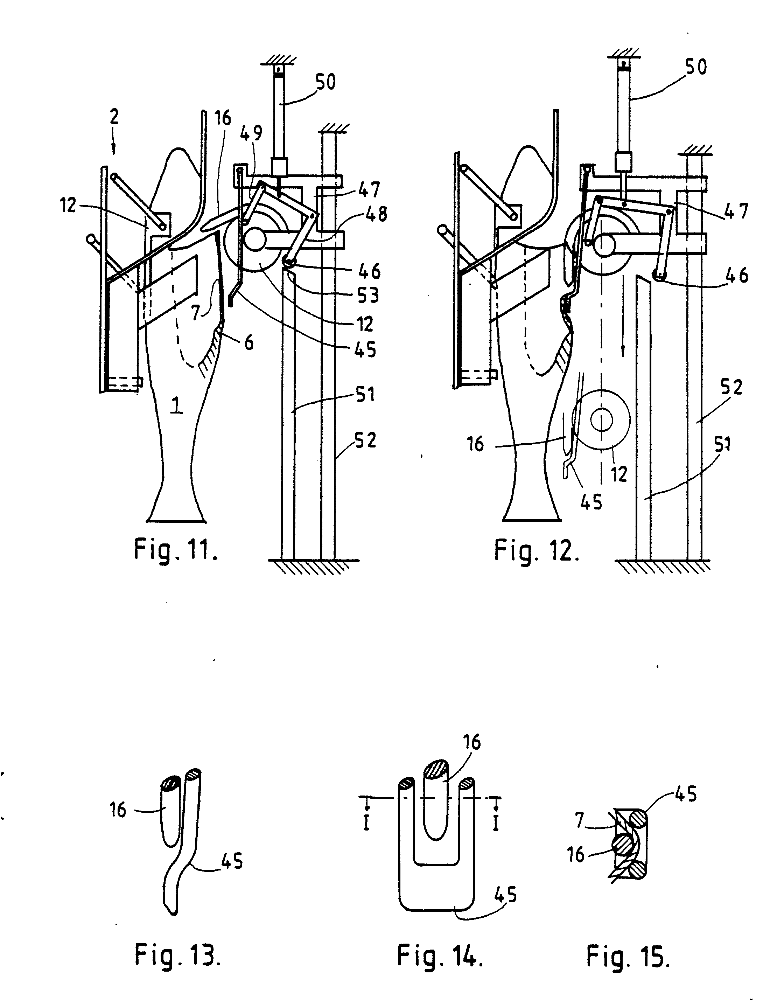

Figs. 11 and 12 show a backstop 45 for the control finger 16, and the lower end of the backstop 45 is shown more detailed in Figs. 13 14 and 15. The backstop works with the control finger 16 for distension of the abdominal wall 7 during the cutting of the abdominal wall 7 by the finger 16 and the knife 12. A steering roller 46 has been placed on a revolvable tipping guide 48 embedded in a slide bracket 47 for control finger 16. The tipping guide 48 carries a tipping link 49 for the control finger for revolving of this around an axis which is here concentric with the rotation knife 12 axis. A cylinder 50 is designed to move the tipping guide 48 and bracket 47 with the knife 12 and the finger 16 down along a steering column 52 when the steering roller 46 during the moving down of the finger 16 engaged with the fish abdominal wall 7 has rolled up a stop 53 to the top side of a guide rail 51. This occurs when the cylinder 50 moves its piston rod downwards. Due to the stop 53 at the guide rail 51, the finger 16 will first turn down in place and then, when the roller 46 is free of the stop, will bracket 47 be carried along in downward direction. Due to the backstop 45, the finger 16 will go out at the anus 6. Fig. 12 shows the finger 16 and the knife 12 at a bottom position, indicating that in the cutting station fish may be cut in different lengths which may be bigger than the one shown in the drawing.

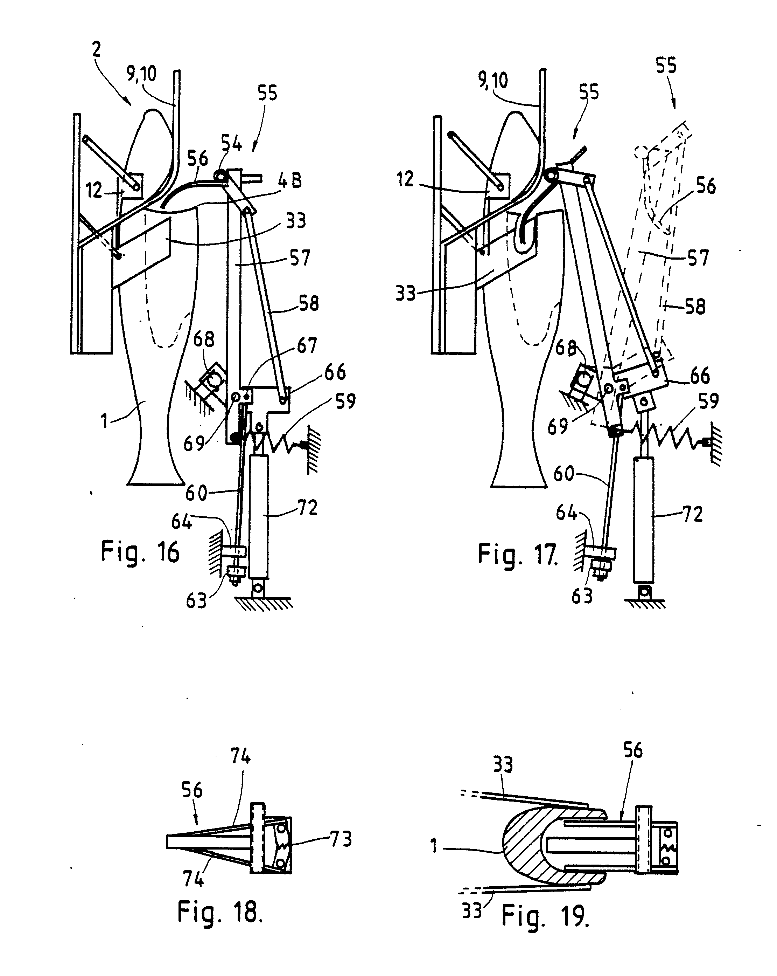

Then the head holder 2 with the fish 1 is carried along to the next station where the gut is to be removed using a scraper mechanism as shown in Figs. 16, 17. This mechanism 55 covers a scraper unit 56 which is crook or spoon-shaped as shown, and which is pivotably embedded at a pivot point 54 at the end of an arm 57 which works together with an auxiliary rod 58 for pivoting of the scraper unit 56. A tumbler spring 59 determining the pressure by which the scraper unit 56 may as a maximum be pressed against the fish 1 spine is connected with the lower end of the rocker arm 57 which is pivotably embedded in a pivot point 69 on a pivot bracket 66 which in turn is pivotably embedded in a pivot point 68 in the engine frame for the scraper mechanism 55. A stop rod 60 with a stop block 63 has been conducted through a stop 64 against which the stop block 63 is stopped when the upper end of the stop rod 60 which is hinged ... connected with the lever arm 57 at the pivot point 67 is moved upward when a cylinder 72 moves the pivot bracket 66 upwards. As shown in Figs. 18 and 29, the scraper unit 56 may have a meshing 73 between two distendable side clamps 74 for distension of these when the scraper unit 56 has been inserted into the fish 1 belly where as shown in Fig. 19 the fish is supported on the sides by the lateral steering control plates 33. The lateral steering control plates 33 will follow the movements of gill holders 9, 10 so that the plate 33 will open when the gill holder opens.

The ejector or scraper unit 56 is activated in that the cylinder 72 is activated, and the ejector unit 56 tips forward as shown in Fig. 17 and into the fish belly at the top below its collar bone in to the fish 1 backbone under a spring load preset at the tension spring 59, thus moving unit 56 downwards along the fish backbone when the cylinder 72 is moved further forward. The unit 56, the lever arm 57, and the auxiliary rod 58 are moved upwards by the cylinder 72 whereas the pivot bracket 56 is pivoted around the pivot point 68, and thus the scraper unit 56 changes its position as shown fully drawn up in Fig. 17. When the stop block 63 hits the stop 64, the scraper unit 56 will eject the fish 1 gut more or less horizontally out as intimated dot-and-dash lined in Fig. 17 while at the same time the distendable side clamps 74 are pressed out against the fish abdominal cavity inside so that the liver is torn loose and is carried along through the opening made by the knife 12. If all the gut is not loosened by itself from the anus, as previously mentioned, the gut will be removed by a continued movement of the head holder 2 past a knife 27, as previously mentioned. At the ejection, the inertia in the mass of gut is thus used to pull this out at a certain rate of speed.

If the machine has been built up as an automatic round table, for instance hydraulically run, the abdominal wall cutting mechanism and the scraper mechanism 55 may appropriately be placed on a unit which follows the head holder 2 during each operation and then goes back, ready for the next operation.

The particular working stations have been built up on the basis of the characteristic obtained by the head holder 2 to the invention, i.e. that the throat point 4A cut loose at the top of the abdominal wall will always be at the same place in relation to the point 11 in the head holder 2, regardless of the size of the fish 1 suspended in the head holder, and consequently the longitudinal cutting may commence at the same place at the particular working station, and the insertion of the scraper unit 56 may be made at the same place at the scraper mechanism 55 working station.

Roundfish is to be understood in this connection at least as codfish, such as cod, coalfish, haddock, whiting, which it has proved possible to process using this procedure and in the apparatus for instance at a seeming angle 38, see Figs. 9 and 10, of 42° ± 5° horizontal section where the true angle 38 will be 37° ± 5° at an angle 39 of 42° ± 5° with vertical.

It has also turned out that the fish cross section area when resting with the throat point 4 at the corner between gill holders 9, 10 at 11 on the gill holders is proportional to the distance of the back head support 12 from 11 and to the fish backbone distance from 11 so that this distance may be measured and used to guide the courses of the knives 14 and the scraper unit 56 right up to the fish backbone regardless of whether it is a small or a big codfish retained in the apparatus, and regardless of whether the fish should have a smaller fish in its jaws.

When the horizontal distance of the back head support 12 is x from the corner 11, it has turned out that a codfish inserted into the gill holders 9,10 has its backbone lying at a horizontal distance from the corner 11 of $Y = X (1 + \frac{A}{B} tg \frac{1}{2} (38))^{-1}$ where (38) is the angle 38 in Fig. 9 and $\frac{A}{B}$ = the relation between the distance A of codfish from back to backbone inside and width B in an area cross section taken at right angles to the fish right behind the gills. For codfish $\frac{A}{B}$ is appr. 0.82 ± 0.03. If you insert into the formula the angle (38) equal to 42°, you will get the following connected values in mm for X/Y: 68.7/41.7, 74.6/45.6, 84.1/52.1, 102.5/62.5, 124.9/76.9, 140.0/86.0, and 150.2/91.2.

These values tally with trial run results where both throat cutting and ejection of gut have been carried out when operating on cod and coalfish without damaging any spine and without leaving any throat lying closely in front of the spine free of cutting. This cutting is important to ensure the ejection of all gut using the ejector or scraper unit. when the horizontal distance Y is thus equal to 0.65x-0.80x, preferably 0.76x, then the corresponding distance $Y_s$ from the corner 11 along the underside of gill holders 9, 10 i.e. appr. 4-10 mm from their top side, which for instance will form 48° with horizontal, is $Y_s = 1.0 \bullet x -1.2x$, preferably 1.13x.

## Claims

1. Procedure for the cleaning of roundfish, including especially the removal of gut from fish, such as cod, coalfish, haddock, salmon, trout, and similar roundfish where the fish is retained during cutting and the removal of the gut, **characteristic in** that a gill holder (9,10) is inserted into each of the fish (1) gill clefts, that the gill holders (9, 10) are closed around the fish head while forming a corner with a contiguous angle (38) of 20-50, preferably 30° at the fish throat point ( 4 ), that a back head support (12) at the fish back head ( 5 ) is moved forward and brought to bear predetermined pressure on the back head ( 5 ) so that the fish head at the throat point is pressed against the corner which, as mentioned above, will be formed by the two gill holders (9, 10) moved against each other.

2. Procedure to claim 1, **characteristic** in that a cut is made in the fish along its collar bone and gill edges from the throat point ( 4 ) and right in to the spine for free cutting of the gut (25) at the gullet.

3. Procedure to claim 1 or 2, **characteristic** in that the fish ( 1 ) abdominal wall (7), and nothing but that, is cut in a long: tudinal section ( 8 ) from the throat point (4B) cut loose by the throat cutting to the anus ( 6 ).

4. Procedure according to one/more of claims 1-3, **characteristic** in that the gut cut loose in the fish abdominal cavity is caught by insertion between gut and spine of a spade-shaped scraper unit (20, 56) possibly distendable in the width without any sharp edges, and that the gut (25) is given an acceleration by the scraper unit in the direction away from the spine and towards the fish belly, and that the gut (25) then possibly hanging out from the anus area is cut loose at the anus area from this.

5. Procedure to one or more of claims 1-4, **characteristic** in that the longitudinal cut is made under distension (Fig. 25) of the abdominal wall (7) and cutting of the abdominal wall (7) between a cutting unit (17) and an end rounded control finger (16) which is moved from throat point (4B) inside along the abdominal wall, i.e. between gut (25) and abdominal wall (7) and at least right to the anus (6).

6. Apparatus for the exercise of the procedure to claim 1, and which has means in the form of gill holders for retaining of fish during cutting and removal of gut, **characteristic** in that it covers a head holder (2) which has partly two gill holders (9, 10) to engage with a gill cleft each of a roundfish (1) put into the head holder (2) and designed to retain its head by the throat point (4) at a corner (11, 38) of 20-50, preferably 30° formed and retained by the gill holders (9, 10) during the operations relating to the removal of gut (25), and which has partly a slidable back head support (12) designed to press a fish put in in the direction towards the corner (11,38).

7. Apparatus to claim 6, **characteristic** in that said two gill holders (9, 10) cover two mutually revolvable guide units which will together in one position (Figs. 2B, 8, 9) form a wedge-shaped inlet for a fish back head, in another position will form an opening at the bottom of the wedge shape for passage of the fish back head with the guide units (9, 10) engaging the gill clefts, and in a third position will be further opened for release of the fish (1).

8. Apparatus to claim 6 or 7, **characteristic** in that the bach head support (12) is slidable and designed to release a pressure in the sliding direction which is practically proportional to the back head distance from the corner (11) or the bottom of said wedge shape between the revolvable guide units (9, 10), and that the horizontal distance of the back head support (12) from the corner (11) is pref. designed to be used as a control parameter for throat cutter and/or ejector of gut.

9. Apparatus to one or more of claims 6-8, **characteristic** in that the gill holders (9-10) are designed to be mutually locked in a setting (Figs. 2B, 8, 9) where the fish head is wedged in the corner (11,38) or in the wedge-shaped opening (42) between gill holders (9,10) by the back head support (12) pressing against the fish back head (5).

10. Apparatus to at least one of claims 6-9, **characteristic** in that it has been designed to transfer the measuring value for the back head support (12) horizontal distance (X) from the corner (11) to control the course of a throat cutter knife so that it will for codfish finish its cutting operation at the distance $Y_s = X - 1.2X$ from the corner (11) and appr. 4-10 mm below the level determined by the top sides of the gill holders (9, 10) which for codfish preferably forms an angle of 48° with horizontal.

Fig. 1.

Fig. 2A.

Fig. 3A.

Fig. 2B.

Fig. 3B.

Fig. 4 A

Fig. 5 A.

Fig. 4 B

Fig. 5 B.

Fig. 6A.

Fig. 7A.

Fig. 6B.

Fig. 7B.

Fig. 8.

Fig. 9.

Fig. 10.

Fig. 11.

Fig. 12.

Fig. 13.

Fig. 14.

Fig. 15.

Fig. 16

Fig. 17.

Fig. 18.

Fig. 19.